# EUROPÄISCHE PATENTSCHRIFT

(11) **EP 0 318 024 B1**
(45) Veröffentlichungstag und Bekanntmachung des Hinweises auf die Patenterteilung: **10.07.1996**
(21) Anmeldenummer: 88119659.6
(22) Anmeldetag: 25.11.1988
(51) Int. Cl.: A61C 8/00

(54) **Mechanische Verbindungselemente**
Mechanical correcting element
Elément de liaison mécanique

(30) Priorität: 27.11.1987 DE 3740192; 30.03.1988 DE 3810857
(43) Veröffentlichungstag der Anmeldung: 31.05.1989
(73) Patentinhaber: Neumeyer, Stefan Dr., D-93458 Eschlkam (DE)
(72) Erfinder: Neumeyer, Stefan Dr., D-93458 Eschlkam (DE)
(74) Vertreter: Wasmeier, Alfons, Dipl.-Ing.

(56) Entgegenhaltungen:
- EP-A- 0 189 184
- FR-A- 2 299 009
- FR-A- 2 336 913
- FR-A- 2 391 175
- FR-A- 2 508 307
- US-A- 4 195 409

## Beschreibung

Die Erfindung betrifft ein tragendes mechanisches Verbindungssystem gemäß dem Oberbegriff von Anspruch 1. Ein derartiges Verbindungssystem ist aus der EP-A-0 189 184 als dem nächstliegenden Stand der Technik bekannt.

Es sind die vielfältigsten Formen und Typen von Schrauben, Bolzen usw. bekannt, deren eines Ende in eine Wand oder ein Bauteil eingesetzt und darin verankert wird, während das andere Ende das zu verbindende bzw. zu befestigende Bauteil aufnimmt. In der Regel werden Schrauben mit Dübeln in die Wand gesetzt oder eingegipst - zur Erzielung hoher Tragkräfte stehen Spezialdübel zur Verfügung. In bestimmten Fällen werden Schrauben oder Bolzen auch in tragende Wände eingeklebt.

Alle bekannten Verbindungen dieser Art haben den Nachteil, daß an den Bolzen bzw. Schrauben Dichtungen erforderlich sind, wenn Wasser bzw. Feuchtigkeit an die Verbindungsstellen gelangen kann; dies gilt auch für Klebeverbindungen, da selbst Klebestellen mit Epoxydklebern durch Wasser im Laufe der Zeit gelöst werden; dies führt zu Korrosionserscheinungen mit all ihren nachteiligen Folgen. Des weiteren haben die Verbindungsstellen derartiger mechanischer Befestigungen nur eine begrenzte Festigkeit und Tragfähigkeit. Hinzu kommt, daß bei vielen Materialien, z.B. Glas oder Keramik, ein zu festes Anziehen der Schrauben zu Sprüngen im Material führt, daß es schwierig ist, diese Materialien zu bohren, um Schrauben oder Dübel einzusetzen, und dergl.

Bei einer Anwendung derartiger Verbindungselemente für den medizinischen bzw. zahnmedizinischen Bereich wird eine mechanische Verbindung zwischen Verbindungselement und Zahnhartsubstanz geschaffen, deren Retentionskraft aufgrund der hohen auftretenden Kräfte einerseits und der auftretenden Mikrorandspalte andererseits relativ gering ist.

Aus der EP 0 189 184 ist ein Dental-Retentionsstift bekannt, der zwischen seinem oberen Abschnitt und seinem unteren Abschnitt einen Flansch aufweist, welcher beim Einsetzen des Dental-Retentionsstiftes in den Zahn auf der Zahnhartsubstanz aufliegt. Der untere Stiftabschnitt wird in die Zahnhartsubstanz eingesetzt, vorzugsweise eingeschraubt, wodurch der Retentionsstift im Zahn verankert wird. Um den oberen Abschnitt herum wird eine Füllungsmasse aufgebaut, die zusammen mit der Zahnhartsubstanz den restaurierten Zahn bildet. Eine Haftvermittlerschicht ist zumindest auf die Oberfläche des oberen Abschnittes aufgebracht, die mit der Füllmasse eine chemische Verbindung eingeht und damit eine erhebliche höhere Retentionskraft ergibt. Der Zahnarzt setzt also den Retentionsstift, der der Handelsgegenstand ist, in die Zahnhartsubstanz ein, und der Stift ist Träger bzw. Gerüst für den vom Zahnarzt individuell geformten Füllungsaufbau.

Aufgabe der Erfindung ist es demgegenüber, ein tragendes mechanisches Verbindungssystem, z.B. Metallstifte, Metallhülsen oder dergl. der gattungsgemäßen Art so weiterzubilden, daß ihre Retentionskraft entscheidend erhöht wird, indem sie einen Überzug aufweisen, der zwischen dem Verbindungselement und dem Aufnahmeelement eine Verbindung ergibt, die eine optimale Festigkeit hat und die spannungsfrei und korrosionsbeständig ist. Auch ist Aufgabe der Erfindung, bei Anwendung in der Medizin oder Zahnmedizin mit einem derartigen Verbindungselement in besonders einfacher und sicherer Weise eine Retention mit dem das Verbindungselement aufnehmenden Aufnahmeelement zu erreichen, die wesentlich höher ist als die mit herkömmlichen Verbindungssystemen erzielbare Retentionskraft.

Gemäß der Erfindung wird diese Aufgabe dadurch gelöst, daß das vorgefertigte Aufnahmeelement ebenfalls mit einer im wesentlichen nichtmetallischen, hydrolysestabilen Haftvermittlerschicht überzogen ist, so daß das Verbindungselement und das Aufnahmeelement zu dem Verbindungssystem so aneinander oder ineinander zu stecken sind, daß die Haftvermittlerschichten beider Elemente miteinander eine hydrolysestabile chemische oder physikalisch-chemische Verbindung eingehen, und das Verbindungssystem Träger bzw. Gerüst für den vom Arzt individuell herzustellenden Aufbau ist. Das Verbindungselement ist vorzugsweise mit einem zylindrischen Schaft versehen, der ein Schraubgewinde auf mindestens einem Teil des Schaftes aufweist, und das Aufnahmeelement ist mit einer Bohrung zum Aufnehmen des Schaftes versehen.

Mit einer derartigen hydrolysestabilen Zwischenschicht in Form eines Haftvermittlers auf beiden Elementen, z.B. Metallstift oder Metallhülse, wird erreicht, daß die Metalloberfläche des Verbindungselementes so fest und dicht mit dem Material des Aufnahmeelementes verbunden ist, daß die Verbindung belastbarer ist als die des Verbindungselementes selbst und daß bei Korrosionsgefahr auf jede Art von zusätzlicher Abdichtung verzichtet werden kann, da beide Teile eine chemische Verbindung miteinander eingehen. Die Fläche, auf der die Bindung erfolgt, ist im Vergleich zu einer mechanischen Verbindung erheblich größer. Diese Fläche kann noch dadurch vergrößert werden, daß die Oberfläche des Verbindungselementes z.B. durch Gewindegänge, Erhebungen und Vertiefungen, Aufrauhungen und dergl. in der Oberflächenstruktur in besonderer Weise gestaltet wird. Damit wird die Haltekraft des Verbindungselementes gegenüber einer rein mechanischen Verbindung um ein Mehrfaches vergrössert.

Die als Haftvermittler ausgebildete Zwischenschicht auf beiden Elementen wird bereits in der Fabrik aufgebracht, so daß der handelsübliche Stift, die Hülse oder dergl. mit Zwischenschicht an den Verbraucher, nämlich den Zahnarzt, gelangt. Die Art der Zwischenschicht hängt von dem Material ab, mit dem Stift bzw. Hülse eine chemische Bindung eingehen soll, d.h. daß unterschiedliche Stifte bzw. Hülsen für unterschiedliche Aufnahmematerialien eingesetzt werden.

Die Zwischenschicht ist auf den Elementen, z.B. Metallstift bzw. Metallhülse, aufgeschrumpft, aufgeklebt, aufgespritzt oder in sonstiger, an sich bekannter Weise in Form eines Überzuges aufgebracht, und zwar entweder auf der gesamten Oberfläche der Elemente oder auf einem Teil dieser Oberfläche, wobei ein Teil der Oberfläche wahlweise unbeschichtet bleibt und z.B. aus magnetischem Material bestehen kann, so daß an dieser unbeschichteten Stelle das Element magnetisierbar ist. Das fertig beschichtete, handelsübliche Verbindungselement, insbes. der Stift, wird vorzugsweise in eine entsprechend geformte Bohrung einer Hülse oder dergl. eingesetzt, die ebenfalls mit einem Kleber versehen ist, der mit der Haftvermittlerschicht des Stiftes oder dergl. eine feste Verbindung eingeht, und damit insgesamt ein chemischer Verbund erreicht wird. Soll ein derartiger Stift oder dergl. als Verbinder für eine Kunststoff-, Keramik-, Glasplatte oder dergl. Bauteil dienen, kann auf einen Schraubvorgang in diesem Bauteil verzichtet werden.

Der Stift, Bolzen oder dergl. mit der Haftvermittlerschicht ist z.B. mit einer weiteren, äußeren Schicht versehen, die die Haftvermittlerschicht umschließt und ihre Beschädigung verhindert. Hierbei handelt es sich um eine Schutzschicht, die so ausgeführt sein kann, daß sie als Ansatz für ein Werkzeug dient, z.B. ein Mehrkantkopf ist.

Die Retentionskräfte von Verbindungselementen mit physikalisch-chemischem bzw. rein chemischem Verbund liegen, wie eingehende Untersuchungen ergeben haben, erheblich über denen mechanischer Retentionssysteme mit Gewinde, wobei die Retentionskraft durch Aufrauhen der Metalloberfläche des Verbindungselementes verbessert werden kann. Der Überzug des Verbindungselementes, das den chemischen Verbund ergibt, kann in unterschiedlicher Weise aufgebaut sein, wie folgende Ausführungsformen ergeben:
Auf das Verbindungselement, z.B. den Stift, ist eine Siliziumoxyd-Kohlenstoff-Schicht, z.B. nach dem bekannten Silicoater-Verfahren aufgebracht. Diese Schicht ergibt mit der Oberfläche des Stiftes oder dergl., der vorzugsweise aus Metall besteht und dessen Umfangsfläche, z.B. durch Sandstrahlen, aufgerauht ist, eine innige adhäsive bzw. physikalische Verbindung. Auf diese SiOₓ-C-Schicht wird ein SilanHaftvermittler aufgetragen, der eine chemische Verbindung zum Kunststoff herstellt, welcher die äußerste Schicht des fertigen Stiftes bildet.

Bei einer anderen Ausführungsform der Erfindung wird auf den aufgerauhten Stift eine Zinnoxyd-Schicht oder entsprechende andere Metalloxyd-Schicht und auf diese eine Zinnoxyd-Titanoxyd- oder dergl. Haftvermitter-Schicht und darüber als äußerste Schicht eine Kunststoffschicht aufgebracht. Die Verbindungen zwischen den einzelnen Schichten sind chemische Verbindungen. Wahlweise kann statt Zinnoxyd ein schwerlösliches Zinnsulfid oder analog anstelle von Titanoxyd Titansulfid verwendet werden, wobei besonders gute Reaktionen mit dem Haftvermittler erzielt werden.

Bei einer weiteren Ausführungsform der Erfindung besteht der Stift oder dergl. aus Titan oder entsprechendem Material, das auf der Oberfläche bei Luftzutritt ein Titanoxyd bildet oder aber dieses Oxyd durch ein spezielles Verfahren entstehen läßt. Auf dieses Titanoxyd wird ein Haftvermittler aufgetragen und darauf der Kunststoff aufgebracht. Anstelle von Titan können auch andere Metalle oder deren Legierungen als Material für den Stift oder dergl. verwendet werden, deren Oberfläche oxydiert. Auch Metallegierungen, z.B. eine Ti-Va-Al-Legierung ist anwendbar. Beispiele für einen derartig verwendbaren Haftvermittler sind Titanate oder 4-Meta-Opak-Resin.

Eine derartige Stiftverbindung kann auch so ausgebildet sein, daß der beschichtete Stift in eine Bohrung, Hülse oder dergl. eingesetzt wird, die ebenfalls aus Metall besteht und eine entsprechende Innenbeschichtung aufweist, so daß zwischen Stift und Hülse eine chemische Verbindung erreicht wird. Die Hülse kann auf ihrem Außenumfang ein Gewinde aufweisen und in ein Gewinde eingeschraubt werden, das in der Bohrung einer Platte, einer Wand oder dergl. Bauteil vorgesehen ist.

Bei der Ausführungsform der Erfindung, bei der das Verbindungselement ein Metallstift, Metallbolzen oder dergl. ist, ist die Beschichtung auf dem Bolzen selbst und auf der Bohrung der Aufnahmeplatte oder dergl., die den Stift aufnimmt, ausgebildet, der Stift kann am einen Ende andererseits auch eine kopfförmige Ausbildung oder einen Stempel aufweisen, der einstückig mit dem Stift hergestellt oder mit ihm verbunden ist, wobei die freie Fläche des Stempels die Beschichtung aufweist. Diese freie Fläche kann als ebene Fläche ausgebildet sein, sie kann jedoch auch bestimmten Verwendungszwecken entsprechend eine von der ebenen Form abweichende Form haben, z.B. pfeilförmig mit der Pfeilspitze nach außen oder nach innen ausgebildet sein, wobei die Pfeilflächen die Beschichtung aufnehmen.

Bei einer weiteren Variante der Erfindung ist das Verbindungselement so ausgebildet, daß es aus zwei teleskopförmig ineinandergeschobenen, vorzugsweise zylindrischen, rohr- oder hülsenförmigen Elementen besteht, wobei das rohrförmige Element größeren Durchmessers auf der inneren Mantelfläche eine Haftvermittlerschicht und das rohrförmige Element kleineren Durchmessers auf der äußeren Mantelfläche eine Haftvermittlerschicht besitzt und bei Ineinanderstecken der beiden rohrförmigen Teile die beiden Haftvermittlerschichten miteinander zusammenwirken und eine chemische, hydrolysestabile Verbindung eingehen.

Anstelle eines stiftförmigen Verbindungselementes kann dieses Verbindungselement auch als Metallhülse ausgebildet sein, die zur mechanischen Aufnahme eines Tragbauteiles oder dergl. dient. Hierbei ist die Hülse vorzugsweise mit einem Innengewinde versehen, in das ein mit Außengewinde versehenes Tragbauteil einschraubbar ist. Die Hülse ist auf ihrer Außenseite mit einer Beschichtung versehen, die mit einer entsprechenden Beschichtung zusammenwirkt, die in einer Bohrung oder Ausnehmung einer Aufnahmeplatte eine chemische Verbindung eingeht.

Eine erfindungsgemäße Verbindung ermöglicht es, Stifte, Schraubbolzen oder dergl. mit einer Keramik-, Glas- oder dergl. Platte so zu befestigen, daß zwischen beiden eine einwandfreie chemische Verbindung erzielt wird, so daß die Verbindungsstelle weder durch anstehende Luft-, Feuchtigkeits- oder ähnliche Einwirkung nachteilig beeinflußt wird.

Bei einer Ausgestaltung der Erfindung, bei der die Erhöhung der Retentionskraft durch besondere Formgebung des Stiftes erreicht wird, ist ein freies Ende des Stiftes mit einer rotationssymmetrisch und im Querschnitt U- bzw. V-förmigen oder kraterförmigen Vertiefung ausgebildet, während die den Krater begrenzende Wandung außen in einen sich konisch in Richtung der Öffnung des Kraters verjüngenden Teil übergeht, so daß die Stiftform sich von einer zylindrischen Ausgestaltung in einen Kegelstumpf mit mittiger kraterförmiger Vertiefung ändert. Bei einer Variation dieser Ausführungsform ist der sich konisch verjüngende freie Abschnitt über einen sich konisch nach außen erstreckenden Abschnitt mit dem zylindrischen Teil des Stiftes verbunden, während die mittige Vertiefung im wesentlichen unverändert beibehalten wird. Diese speziellen Formgebungen lassen eine gleichmäßigere Kraftübertragung am Stift zu, so daß das diese Stifte umgebende Füllungsmaterial bei Beanspruchung nicht gestaucht wird. Bei diesen Formgebungen ist je nach dem verwendeten Stiftmaterial die Oberfläche aufgerauht; wobei sich eine optimale Ausgestaltung z.B. für Amalgam durch Verwendung von rauhem Diamantkorn ergibt. Die Oberfläche kann in der vorbeschriebenen Weise beschichtet sein, sie kann jedoch auch mit Hydroxylapatit oder Trikalziumphosphat beschichtet sein. Spezielle Effekte lassen sich dadurch erzielen, daß die Beschichtung über die Oberfläche hinweg unterschiedlich, also nicht kontinuierlich aufgebracht wird, damit die Verteilung der Beanspruchungen gesteuert werden kann.

Die Güte bzw. Festigkeit der Verbindung wird weiter dadurch erhöht, daß die auf den Stift aufgebrachte Schicht auf ihrer Außenfläche aufgerauht und damit die Oberfläche vergrößert wird. Das Maß der Rauhigkeit wird dabei entsprechend dem Material gewählt, das mit dieser Schicht in Kontakt kommt. Rauhigkeit und Festigkeit des umgebenden Materials stehen dabei in einem bestimmten Zusammenhang. Festere Materialien benötigen eine höhere Rauhigkeit für eine optimale Retention, weniger feste Materialien benötigen eine geringere Rauhigkeit. Diese Rauhigkeit kann auf der Außenseite des mit Überzug versehenen Metallstiftes durch mechanisches Aufrauhen, durch Einbetten von Diamantkörpern in die Überzugsschicht usw. erfolgen. Es ist jedoch auch möglich, auf die Überzugsschicht eine dämpfende Schicht aufzubringen, die auf ihrer Außenseite die Rauhigkeit bzw. entsprechende, aus der Oberfläche vorstehende Körner enthält. Bei einem speziellen Retentionsstift aus Metall bzw. einem in Stiftform ausgebildeten Implantat aus Metall ist ein Haftvermittler auf der Stiftoberseite, darüber eine Kunststoffschicht und darüber eine weitere Schicht eines Haftvermittlers aufgetragen; diese Schichten stellen ein dämpfendes System dar, auf welchem nach außen anschließend eine weitere Schicht, z.B. eine Titanschicht aufgetragen ist, deren Oberfläche aufgerauht oder mit rauhen Partikeln versehen ist.

Eine bevorzugte Ausgestaltung der erfindungsgemäßen Elemente für die Dentaltechnik ist folgende:
Metallstift mit konzentrischer Bohrung und Innengewinde zur Aufnahme eines Schraubelsmentes, mit SiOₓ x C -Silan-Haftvermittlerschicht, die in eine entsprechende Keramikhülse, z.B. aus Aluminiumoxyd oder dergl. biokompatibler Keramikmasse oder Trikalziumphosphat eingesetzt und mit ihr verbunden wird, und die innen ebenfalls mit einem Haftvermittlerüberzug versehen ist.

Nachstehend wird die Erfindung in Verbindung mit der Zeichnung anhand von Ausführungsbeispielen erläutert. Es zeigt:
- Fig. 1: eine Ausführungsform eines Verbindungselementes mit Aufnahmeelement nach der Erfindung,
- Fig. 2: eine Variante eines Verbindungselementes nach Fig. 1,
- Fig. 3: eine spezielle Ausführungsform eines Verbindungselementes in Stempelform,
- Fig. 4: eine abgeänderte Ausbildung des Stempels nach Fig. 3,
- Fig. 5: eine weitere Ausführungsform des Stempels nach Fig.3,
- Fig. 6: gestrichen
- Fig. 7: gestrichen
- Fig. 8: eine andere Ausführungsform der Erfindung als Hülse,
- Fig. 9: eine weitere Ausführungsform der Erfindung in Form einer Schraubverbindung,
- Fig. 10: eine spezielle Ausführungsform einer konstruktiven Ausgestaltung einer Stiftverbindung nach der Erfindung,
- Fig. 11: eine Variante der Ausführungsform nach Fig. 10,
- Fig. 12-16: gestrichen
- Fig. 17: eine andere Ausgestaltung des Verbindungselementes nach der Erfindung,
- Fig. 18: gestrichen
- Fig. 19: eine andere Ausführungsform und Anwendung des erfindungsgemäßen Verbindungselementes,
- Fig. 20: ein Ausführungsbeispiel für den Schichtaufbau der Ausführung nach Fig. 19 oder vorausgehenden Figuren,
- Fig. 21, 22: gestrichen
- Fig. 23: eine andere Ausführungsform einer Stift- bzw. Bolzenverbindung mit einem Implantat,
- Fig. 24: gestrichen
- Fig. 25, 26, 27: weitere Ausgestaltungen eines Stiftes bzw. Bolzens nach der Erfindung,
- Fig. 28: eine andere Ausführungsform einer Hülse,
- Fig. 29, 30: gestrichen
- Fig. 31: ein Ausführungsbeispiel für die Anwendung der Erfindung auf eine Geschiebeanordnung.

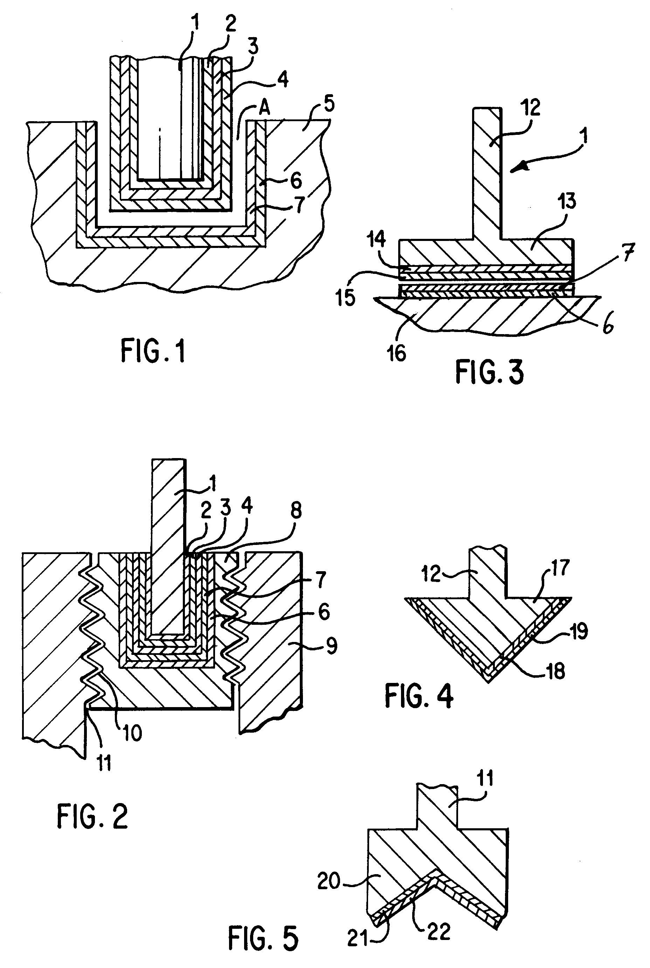

Ein Verbindungselement, z.B. ein Stift oder Bolzen 1 nach Fig. 1 weist einen Haftvermittlerüberzug 2, z.B. SiOₓ-C, einen Silanüberzug 3 und einen äußeren Kunststoffüberzug 4 auf. Die Überzüge sind vorzugsweise gleichmäßig und vollständig über den gesamten Stift 1 aufgetragen, können aber auch wahlweise nur am Kopfende aufgetragen sein, das mit einer der Form des Stiftkopfes angepaßten Aussparung A des Aufnahmeelementes 5 in Eingriff kommt. Das Aufnahmeelement 5 ist beispielsweise eine Glas-, Keramik-, oder Kunststoffplatte und weist in der Aussparung A einen Silanüberzug 6 und einen Kunststoffüberzug 7 auf, der mit dem Kunststoffüberzug 4 des Stiftes eine chemische Verbindung eingeht. In der Fig. 1 sind die Kunststoffschichten 4 und 7 im Abstand voneinander getrennt dargestellt; in der Praxis ist die Dimensionierung und Passung jedoch so gewählt, daß die Kunststoffschichten 4 und 7 beim Einsetzen des Stiftes in die Aussparung A Kontakt miteinander haben und miteinander reagieren.

Zusätzlich zu der chemischen bzw. physikalisch-chemischen Verbindung zwischen Verbindungselement und Aufnahmeelement wird eine verbesserte mechanische Retention dadurch erreicht, daß die Außenfläche des Schaftes des Verbindungselementes vergrößert wird, beispielsweise durch mechanisches oder chemisches Aufrauhen der Oberfläche, durch am Außenumfang aufgebrachte Erhebungen und Vertiefungen, Gewindegänge oder dergl.

Bei der Ausführungsform nach Fig. 2 ist der Stift 1 in der in Fig. 1 angegebenen Weise ausgebildet. Die Kunststoffschicht 4 steht hierbei mit der Kunststoffschicht 7 eines Zwischenkörpers 8 in Eingriff, der entsprechend der Darstellung nach Fig. 1 eine Silanschicht 6 aufnimmt. Der Zwischenkörper 8 ist mit einem Aufnahmeelement, z.B. einer Aufnahmeplatte bzw. Aufnahmewand 9 verbunden; dabei kann der Zwischenkörper 8 auf seinem zylindrischen Außenumfang ein Gewinde 10 aufweisen, während die Aufnahmeplatte 9 ein Gegengewinde 11 besitzt, so daß der Zwischenkörper 8 mit Stift 1 in die Aufnahmeplatte 9 einschraubbar ist.

In Fig. 3 ist eine Stift 1 dargestellt, der aus einem Schaft 12 und einem am unteren Ende des Schaftes 12 einstückig verbundenen Stempelkörper 13 ausgebildet ist, auf dessen freier, vom Schaft 12 abgelegener Seite eine Haftvermittlerschicht 14 und eine Kunststoffschicht 15 aufgebracht sind. Ein entsprechendes Verbindungssystem aus Haftvermittler 6 und Kunststoff 7, wie es dem System 14, 15 entspricht, ist auch auf dem Aufnahmeelement 16 den Schichten 14 und 15 zugeordnet aufgebracht.

Die Wirkfläche des Stempels 13 ist in Fig. 3 plan dargestellt. In Fig. 4 ist dieser Stempel 17 mit seiner Wirkfläche kegelförmig ausgebildet, wobei die Kegelflächen eine Haftvermittlerschicht 18 und eine Kunststoffschicht 19 aufnehmen, die mit einer entsprechenden Gegenfläche des Aufnahmeelementes eine chemische Verbindung eingehen. Bei einer Variante nach Fig. 5 ist der Stempelkörper 20 umgekehrt kegelförmig ausgebildet; auf der Kegelfläche des Körpers 20 sind entsprechend die Haftvermittlerschicht 21 und die Kunststoffschicht 22 aufgetragen.

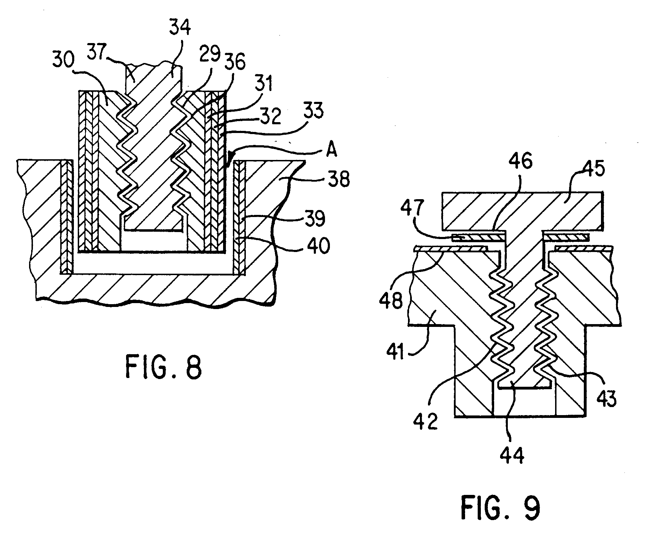

Bei der Variante nach Fig. 8 wird anstelle eines Stiftelementes eine Metallhülse 29 oder ein entsprechendes Bauteil verwendet. Diese Hülse 29 ist auf ihrer zylindrischen Außenfläche mit einem Gewinde 30, einer Aufrauhung oder entspr. mechanischen Oberflächenvergrößerung versehen, um eine bessere Haftung der sich nach außen anschließenden Schichten zu erzielen. Mit 31 ist die Haftvermittlerschicht, mit 32 die Silanschicht und mit 33 die äußere Kunststoffschicht bezeichnet. Die Hülse 29 weist auf ihrer Innenzylinderfläche beispielsweise ein Gewinde 36 auf, das mit dem Gewinde 37 eines Schraubbolzens 34 verbunden ist. Mit 38 ist das Aufnahmeelement bezeichnet, das eine Ausnehmung, Bohrung oder dergl. A besitzt, auf deren zylindrischer Innenfläche (und ggfs. Bodenfläche) eine Haftvermittlerschicht 39 und eine Kunststoffschicht 40 aufgetragen ist, die mit der Kunststoffschicht 33 der Hülse 29 eine chemische Verbindung eingeht.

Eine andere Ausführungsform der Erfindung ist in Fig. 9 dargestellt. Das Aufnahmeelement, z.B. eine Aufnahmeplatte 41, weist eine Bohrung 42 mit Schraubinnengewinde 43 auf, in die ein Schraubbolzen 44 eingeschraubt ist, der einen Schraubkopf 45 besitzt, welcher in Anlage mit der Oberfläche der Aufnahmeplatte 41 steht. Auf der Unterseite 46 des Schraubkopfes 45 ist ein konzentrischer Sicherungsring 47 befestigt, der mit der Oberseite der Platte 41 eine dichte Verbindung ergibt, so daß das Eindringen von Feuchtigkeit oder dergl. in den Schraubenschaft verhindert wird. Ein entsprechender Gegen-Sicherungsring 48 kann auf der zugewandten Seite der Platte 41 so angeordnet sein, daß die beiden Sicherungs- bzw. Dichtungsringe 47 und 48 miteinander eine Abdichtung ergeben. Die Sicherungsringe 47 und 48 sind dabei in entsprechender Weise wie die Haftvermittlerschichten und Kunststoffschichten nach den vorausgehenden Ausführungsformen ausgebildet, so daß eine feste, chemische Verbindung zwischen dem Sicherungsring 47 und der Platte 41 bzw. zwischen den beiden Sicherungsringen 47 und 48 erzielt wird.

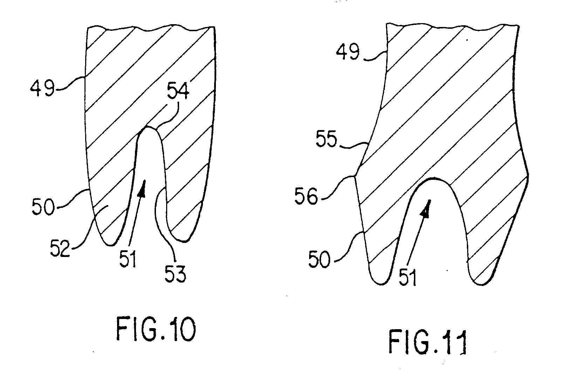

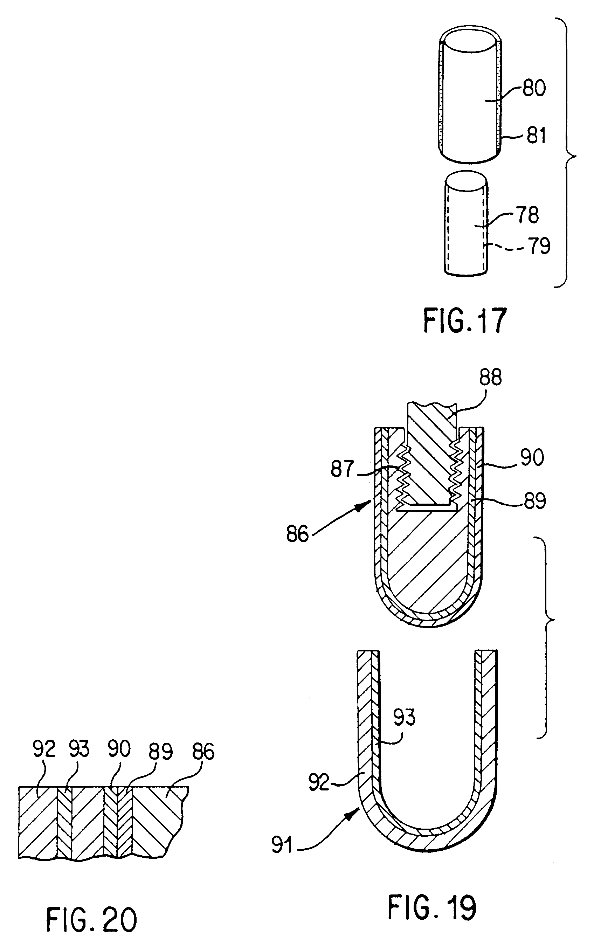

Die Ausführungsformen nach den Figuren 10 und 11 betreffen verschiedene Formgebungen von Verbindungselementen, insbes. Verbindungsstiften nach der Erfindung, durch die eine gleichmäßigere und höhere Kraftübertragung als bei herkömmlichen Stiften erzielt werden kann; diese spezielle Formgebung der Stifte ist von besonderer Bedeutung für die Dentaltechnik, wenn diese Stifte für die Restaurierung von Zähnen eingesetzt werden. Diese Stifte sind im wesentlichen zylindrisch ausgebildet; am einen Ende verjüngt sich der Stift (Außenwandfläche 50) leicht nach unten und innen und geht an der untersten Stelle in eine rotationssymmetrische Aussparung, Einschnürung oder Vertiefung 51 über, deren Querschnittsform etwa einem U entspricht. Damit entsteht eine Kraterform, deren ringförmige Seitenwand 52 sich konisch nach außen verjüngt (mit 50 und 53 angedeutet), während der Boden des Kraters bei 54 gerundet ist. An den zylindrischen Schaft 49 des Stiftes nach Fig. 11 schließt sich nach unten und außen eine etwa konisch verlaufende Erweiterung 55 an, die an der Stelle 56 in die konisch nach unten und innen verlaufende Außenwandfläche 50 übergeht.

Ein zylindrischer Stift 49 nach den Figuren 10 und 11 kann die gleichen Beschichtungen aufweisen, wie sie in Verbindung mit den vorausgehenden Figuren erläutert sind, sie Oberfläche kann jedoch auch mit Hydroxylapatit oder Trikalziumphosphat überzogen sein; des weiteren kann die Beschichtung an unterschiedlichen Stellen unterschiedlich stark ausgebildet sein und braucht nicht notwendigerweise kontinuierlich zu sein. Zweckmäßigerweise ist die Oberfläche des Stiftes, insbesondere an den Flächen 50, 53, 54 und 55 aufgerauht bzw. so bearbeitet, daß eine Oberflächenvergrößerung entsteht, wobei durch eine Schicht mit Diamantkorn eine optimale Aufrauhung für das den Stift umgebende Material in Form von Amalgam erzielt wird.

Fig. 17 zeigt eine andere Ausführungsform eines Verbindungselementes nach der Erfindung in Form eines Rohrabschnittes 78 mit Haftvermittlerschicht 79 auf seinem Außenumfang. Dem Abschnitt 78 ist ein Abschnitt 80 größeren Durchmessers als Aufnahmeelement zugeordnet, das auf seinem Innenumfang eine Haftvermittlerschicht 81 aufweist. Die beiden rohrförmigen Elemente 78, 80 sind so dimensioniert, daß sie ineinander angeordnet über die Haftvermittlerschichten 79, 81 eine chemische Verbindung miteinander eingehen, ähnlich wie dies zwischen einem stiftförmigen Verbindungselement und einem entsprechenden Aufnahmeelement nach vorliegender Erfindung der Fall ist.

Eine weitere Ausführungsform eines Verbindungselementes in Form eines Stiftes aus Metall in Verbindung mit einem Aufnahmeelement, nämlich einer Aufnahmehülse, ist in Fig. 19 dargestellt. Der Metallstift 86, der z.B. am einen Ende eine Aussparung 87 mit Gewindegängen zur Aufnahme eines Schraubbolzens 88 aufweist, ist mit einer SiOₓC-Schicht 89 und einer äußeren Haftvermittlerschicht 90 versehen. Dieser Stift wird in eine Keramikhülse 91 eingesetzt, deren Innenwandung 92 der Form des Stiftes 86 angepaßt ist und einen Haftvermittlerüberzug 93 aufweist, der mit der Haftvermittlerschicht 90 des Stiftes eine chemische Verbindung eingeht, derart, daß Hülse und Stift miteinander fest und hydrolysestabil verbindbar sind. Die Schichtenfolge der Kombination aus Stift und Hülse ist in Fig. 20 schematisch dargestellt.

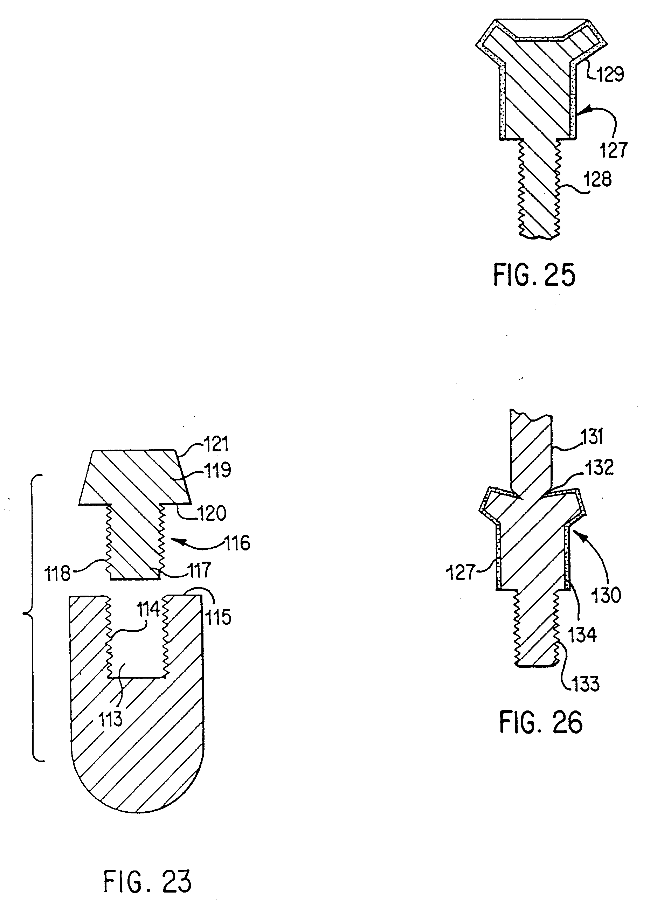

Bei der Ausführungsform nach Fig. 23 ist ein Implantat dargestellt, das in einen Knochen eingesetzt ist. Dieses Implantat weist auf seiner Oberseite eine Bohrung 113 auf, die mit einem Innengewinde 114 versehen ist. Die obere Begrenzung des Implantats ist mit 115 bezeichnet. Der Stift bzw. Bolzen 116 weist einen Schaft 117 mit Gewinde 118 auf, das in Eingriff mit dem Innengewinde 114 des Implantats gebracht wird, sowie einen Kopf 119, dessen untere Begrenzung 120 als Anschlag in Anlage mit der Oberseite 115 des Implantats kommt. Der Schaft 117 weist wahlweise eine Beschichtung 121 auf, die die Mantelfläche des Stiftes bzw. Bolzens 116 ganz oder teilweise überzieht. Diese Beschichtung besteht aus einem Haftvermittler, wahlweise einem sich nach außen anschließenden Opaker und auf diesem einen Kunststoff. Die Außenseite der Beschichtung kann zusätzlich zu der Gewindeausbildung in spezieller Weise aufgerauht sein, um die Oberfläche weiter zu vergrößern. Bei Verwendung eines Haftvermittlers kann ggfs. auf ein Gewinde am Bolzenschaft verzichtet werden.

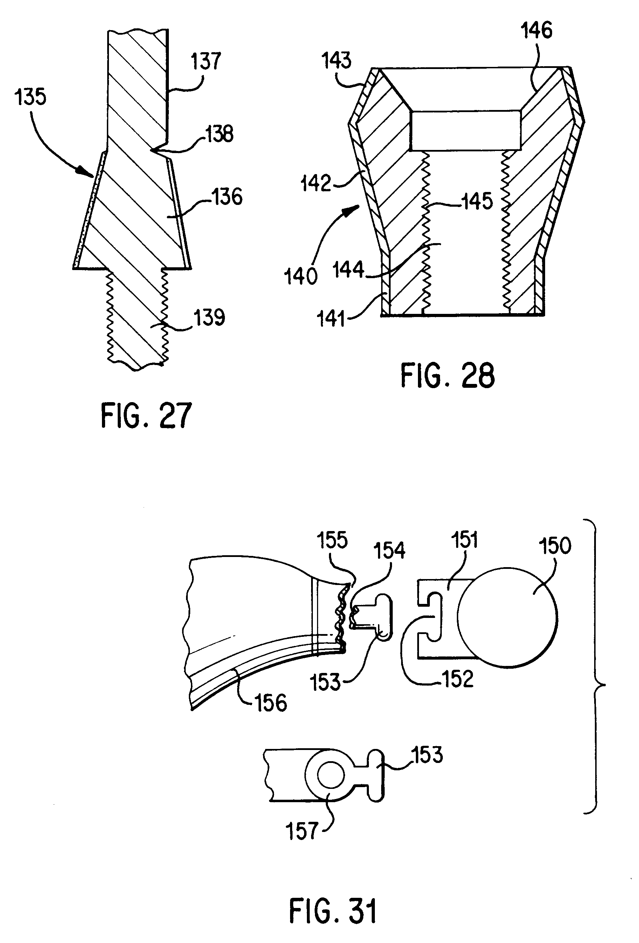

In den Fig. 25, 26 und 27 sind weitere Ausführungsformen eines Stiftes bzw. Bolzens dargestellt. Der Stift 127 nach Fig. 25 weist ein Kopftfeil 127 auf, das dem nach Fig. 24 entspricht; das Kopfteil 127 besitzt einen Schaft 128 mit Schraubgewinde, der z.B. analog der Ausführung nach Fig. 23 in ein Implantat 112 eingesetzt werden kann. 129 bezeichnet eine Beschichtung ähnlich der Beschichtung 121 der Fig. 23. Der Stift bzw. Bolzen 130 nach Fig. 26 entspricht dem nach Fig. 25, jedoch weist dieser Stift einen Ansatz 131 zum Eindrehen des Stiftes sowie eine Sollbruchstelle 132 auf, an der der Ansatz 131 vom Kopf 127 beim Eindrehen gelöst wird. Der Stift 130 weist ebenfalls einen Schaft 133 mit Schraubgewinde auf, während der Kopf mit einer Beschichtung 134 versehen ist. Der Stift 135 nach Fig. 27 ist ähnlich aufgebaut, wobei der Kopf 136 konische zum Ansatz 137 zuläuft und an der Übergangsstelle eine Sollbruchstelle 138 vorgesehen ist. Der Schaft 139 besitzt wiederum ein Schraubgewinde.

In Fig. 28 ist eine Hülse 140 dargestellt, die aus einem zylindrischen Abschnitt 141 in einen sich nach außen erweiternden Abschnitt 142 und von dort in einen sich nach innen verjüngenden Abschnitt 143 übergeht (ähnlich der äußeren Form des Stiftes in Fig. 24); die Hülse weist jedoch eine Innenbohrung 144 mit Gewinde 145 auf und ist im Anschluß an das Gewinde nach außen bei 146 konisch erweitert.

Fig. 31 zeigt eine Ausführungsform der Erfindung zum Verbinden von Präzisionselementen in der Zahntechnik, z.B. eine Geschiebeanordnung. Eine Krone 150 ist dabei mit einem Geschiebeelement 151 versehen, dessen T-förmige Aussparung 152 ein Anschluß-Gegenelement 153 aufweist; das entgegengesetzte Ende 154 des Gegenelementes 153 ist als Verzahnung ausgebildet, die mit einer Gegenverzahnung 155 als Abschluß einer Metallbasis 156 nach Art von Patrize und Matrize in Eingriff kommt. Die beiden Verzahnungen 154 und 155 sind mit Haftvermittlerschichten versehen, die miteinander eine chemische Verbindung eingehen, wie sie in Verbindung mit den vorausgehenden Beispielen erläutert ist. Anstelle der dargestellten Verzahnungen154, 155 kann das Gegenelement 153 mit einem Ring 157 versehen sein, der den Abschluß der Metallbasis 156 bildet.

## Patentansprüche

1. Tragendes mechanisches Verbindungssystem, bestehend aus einem vorgefertigten Verbindungselement, z.B. Stift oder Hülse, aus Metall oder entsprechend hochfestem Material, wobei das Verbindungselement (1, 29, 44, 49, 78, 88, 116) zumindest teilweise mit einer im wesentlichen nichtmetallischen, hydrolysestabilen Haftvermittlerschicht (2) auf seiner Außenseite überzogen ist, und einem damit zu verbindenden vorgefertigten Aufnahmeelement, z.B. Aufnahmeplatte oder -hülse aus Glas, Keramik, Metall oder Kunststoff, für die medizinische, zahnmedizinische und zahntechnische Anwendung, **dadurch gekennzeichnet**, daß das vorgefertigte Aufnahmeelement (5, 38, 41, 80, 91, 105,) ebenfalls mit einer im wesentlichen nichtmetallischen hydrolysestabilen Haftvermittlerschicht (6) überzogen ist, so daß das Verbindungselement (1) und das Aufnahmeelement (5) zu dem Verbindungssystem so aneinander oder ineinander zu stecken sind, daß die Haftvermittlerschichten beider Elemente miteinander eine hydrolysestabile chemische oder physikalisch-chemische Verbindung eingehen, und das Verbindungssystem Träger bzw. Gerüst für den vom Arzt individuell herzustellenden Aufbau ist.

2. Verbindungssystem nach Anspruch 1, dadurch gekennzeichnet, daß das Verbindungselement (116) mit einem zylindrischen Schaft (117) versehen ist, der ein Schraubgewinde (118) auf mindestens einem Teil des Schaftes aufweist, und daß das Aufnahmeelement mit einer Bohrung (113) zum Aufnehmen des Schaftes (117) versehen ist.

3. Verbindungssystem nach Anspruch 2, dadurch gekennzeichnet, daß das Verbindungselement (116) am oberen Ende einen Schraubkopf (119) aufweist.

4. Verbindungssystem nach Anspruch 1, dadurch gekennzeichnet, daß Teile des Verbindungselementes als Matrizen-oder Patrizenelemente (154, 155) ausgebildet sind, die miteinander in Eingriff stehen, und mit einer Haftvermittlerschicht an einer vorbestimmten Stelle überzogen sind, wobei der Überzug auf der Verbindungsfläche eine hydrolysestabile, die Verbindung unterstützende Schicht, z.B. eine Metallkeramikschicht ist.

5. Verbindungssystem nach Anspruch 1, dadurch gekennzeichnet, daß das Verbindungselement einen zylindrischen Schaft (49) aufweist, daß eine kreisförmige Verjüngung (50) sich konisch zum freien Ende erstreckt, und daß eine im Querschnitt kreisförmige U-förmige Aussparung (51) sich von dem freien Ende nach innen erstreckt, die so geformt ist, daß eine Spannungsreduzierung erzielt wird (Figuren 10, 11,).

6. Verbindungssystem nach Anspruch 1, dadurch gekennzeichnet, daß die Oberfläche des Verbindungselementes mindestens teilweise aufgerauht ist, und daß der Aufrauhungsgrad auf die Festigkeitswerte des zu verankernden Materials optimiert abgestimmt ist.

7. Verbindungssystem nach Anspruch 1, gekennzeichnet durch eine Anordnung aus zwei Rohren (78, 80), die teleskopartig ineinander angeordnet sind, wobei das Rohr (80) mit größerem Durchmesser auf seiner Innenfläche mit einer Haftvermittlerschicht versehen ist, und das Rohr (78) mit kleinerem Durchmesser auf seiner Außenfläche mit einer Haftvermittlerschicht versehen ist, so daß beide Rohre bei einer teleskopischen Ineinanderverschiebung eine chemische oder physikalischchemische, hydrolysestabile Verbindung über die Haftvermittlerschichten eingehen.

8. Verbindungssystem nach Anspruch 1, dadurch gekennzeichnet, daß die Haftvermittlerschicht (6) mit einer Kunststoffschicht versehen ist, die auf die Haftvermittlerschicht aufgebracht wird, welche eine chemische Verbindung mit der Haftvermittlerschicht und dem Material des Aufnahmeelementes eingeht.

9. Verbindungssystem nach Anspruch 1, dadurch gekennzeichnet, daß mehrere Haftvermittlerschichten auf das Verbindungselement aufgebracht sind.

10. Verbindungssystem nach Anspruch 1, dadurch gekennzeichnet, daß das Verbindungselement ein Stift ist und daß das äußere Ende des Stiftes als Schraubkopf zur Aufnahme eines Schraubwerkzeuges mit einem Werkzeugkopf und einem Schaft ausgebildet ist, wobei der Werkzeugkopf oder Schaft mit einer Sollbruchstelle ausgebildet ist, an der der Werkzeugkopf vom Schaft getrennt wird (Fig. 26).

11. Verbindungssystem nach Anspruch 10, dadurch gekennzeichnet, daß der Stift (1) am einen Ende erweitert (12, 13, 17, 20) ist, und daß an dieser Stelle ein Überzug (14, 15; 18, 19; 21, 22) aufgebracht ist, der eine chemische Verbindung mit dem Aufnahmeelement ergibt.

12. Verbindungssystem nach Anspruch 11, dadurch gekennzeichnet, daß die Verbreiterung des Stiftes ein Stempelkörper (13, 17, 20) ist, und daß die Basis dieses Stempelkörpers pfeilförmig ausgebildet und die Oberfläche mit der Haftvermittlerschicht versehen ist.

13. Verbindungssystem nach Anspruch 10, dadurch gekennzeichnet, daß der Stift (44) mit einem Sicherungsring (47) auf der Unterseite des Schraubkopfes (45) versehen ist, daß der Ring (47) mit dem Schraubkopf (45) befestigt ist und seine Unterseite in Kontakt mit dem Aufnahmeelement (41) steht, und daß die Seite des Aufnahmeelementes (41), die dem Sicherungsring (47) zugewandt ist, einen entsprechenden Gegen-Sicherungsring (48) aufweist.

14. Verbindungssystem nach Anspruch 5, dadurch gekennzeichnet, daß der zylindrische Schaft (49) in eine sich nach außen erstreckende, im Querschnitt kreisförmige konische Form (55) übergeht, die mit der kreisförmigen, konischen Verjüngung (50) verbunden ist.

## Claims

1. Load-bearing mechanical connecting system comprising a prefabricated connecting element, e.g. a pin or sleeve, made from metal or a corresponding high strength material, the connecting element (1, 29, 44, 49, 78, 88, 116) being at least partly coated on its outside with a substantially nonmetallic, hydrolysis-stable primer coating (2), and a prefabricated reception element to be connected therewith, e.g. a reception plate or sleeve made from glass, ceramic, metal or plastic, for medical or dental purposes, characterized in that the prefabricated reception element (5, 38, 41, 80, 91, 105) is also coated with a substantially nonmetallic, hydrolysis-stable primer coating (6), so that the connecting element (1) and the reception element (5) for the connection system are to be so fitted onto or into one another that the primer coatings of both elements together for: a hydrolysis-stable, chemical or physicochemical joint and the connecting system is the support or structure for the means to be individually produced by the doctor or dentist.

2. Connecting system according to claim 1, characterized in that the connecting element (116) is provided with a cylindrical shaft (117), which has a screw thread (118) on at least part of the shaft and that the reception element is provided with a bore (113) for receiving the shaft (117).

3. Connecting system according to claim 2, characterized in that at the upper end the connecting element (116) has a screw head (119).

4. Connecting system according to claim 1, characterized in that the parts of the connecting element are constructed as male or female eleements (154, 155), which are in engagement with one another and are coated at a predetermined point with a primer coating, the coating on the connecting face being a hydrolysis-stable, connection-supporting coating, e.g. a metal ceramic coating.

5. Connecting system according to claim 1, characterized in that the connecting element has a cylindrical shaft (49), that a circular taper (50) extends conically towards the free end and that a cross-sectionally circular, U-shaped recess (51) extends inwards from the free end and which is shaped in such a way that a stress reduction is obtained (figs. 10 and 11).

6. Connecting system according to claim 1, characterized in that the surface of the connecting element is at least partly roughened and that the degree of roughening is matched in optimized manner to the strength values of the material to be anchored.

7. Connecting system according to claim 1, characterized by an arrangement of two tubes (78, 80), which are arranged telescopically within one another, the larger diameter tube (80) being provided on its inner face with a primer coating and the smaller diameter tube (78) is provided on its outer face with a primer coating, so that on telescopically sliding together the two tubes form, by means of the primer coatings, a chemical or physicochemical, hydrolysis-stable joint.

8. Connecting system according to claim 1, characterized in that the primer coating (6) is provided with a plastic layer, which is applied to the primer coating and which forms a chemical connection with the primer coating and the material of the reception element.

9. Connecting system according to claim 1, characterized in that several primer coatings are applied to the connecting element.

10. Connecting system according to claim 1, characterized in that the connecting element is a pin and that the outer end of the pin is constructed as a screw head for receiving a screwing tool with a tool head and a shaft, the tool head or shaft being constructed with a predetermined breaking point, where the tool head is separated from the shaft (fig. 26).

11. Connecting system according to claim 10, characterized in that the pin (1) is widened at one end (12, 13, 70, 20) and that at this point a coating (14, 15, 18, 19, 21, 22) is applied, which forms a chemical connection with the reception element.

12. Connecting system according to claim 11, characterized in that the widening of the pin is a punch body (13, 17, 20) and that the base of said punch body is arrow-shaped and the surface is provided with the primer coating.

13. Connecting system according to claim 10, characterized in that the pin (44) is provided with a retaining ring (47) on the underside of the screw head (45), that the ring (47) is fixed to the screw head (45) and that its underside is in contact with the reception element (41) and that the side of the reception element (41) facing the retaining ring (47) has a corresponding opposite retaining ring (48).

14. Connecting system according to claim 5, characterized in that the cylindrical shaft (49) passes into an outwardly extending, cross-sectionally circular, conical shape (55), which is connected to the circular, conical taper (50).

## Revendications

1. Système d'assemblage mécanique portant, constitué d'un élément de fixation préfabriqué, par exemple une tige ou un manchon conçu à partir de métal ou d'un matériau à résistance élevée, ledit élément de fixation (1, 29, 44, 49, 78, 88, 116) étant recouvert sur sa face externe du moins en partie par une couche intermédiaire adhésive (2) principalement non métallique et à l'hydrolyse stable, et d'un élément de réception préfabriqué devant y être connecté, par exemple une plaque ou un manchon de réception en verte, en céramique, en métal ou en plastique, destiné à être utilisé dans le domaine de la médecine, de la médecine dentaire et de la technique dentaire, **caractérisé en ce que**, l'élément de réception préfabriqué (5, 38, 41, 80, 91, 105) est également recouvert d'une couche intermédiaire adhésive (6) principalement non métallique et à l'hydrolyse stable, si bien que l'élément de fixation (1) et l'élément de réception (5) doivent être placés l'un sur l'autre ou l'un dans l'autre dans le système de fixation de telle manière que les couches intermédiaires adhésives des deux éléments forment une fixation chimique à l'hydrolyse stable ou une fixation physico-chimique, et que le système de fixation représente le support ou le cadre pour la construction devant être fabriquée individuellement par le médecin.

2. Système d'assemblage selon la revendication 1, caractérisé en ce que l'élément de fixation (116) est pourvu d'une tige cylindrique (117) présentant un filet de vis (118) sur au moins une partie de la tige, et en ce que l'élément de réception est pourvu d'un évidement (113) destiné à recevoir la tige (117).

3. Système d'assemblage selon la revendication 2, caractérisé en ce que l'élément de fixation (116) à l'extrémité supérieure présente une tête de vis (119).

4. Système d'assemblage selon la revendication 1, caractérisé en ce que, des parties de l'élément de fixation sont conçues comme des éléments de matrices ou de poinçons (154, 155) engrènés les uns dans les autres et qui sont recouverts en un point prédéterminé par une couche intermédiaire adhésive, le revêtement de la surface de fixation étant une couche à l'hydrolyse stable et soutenant la fixation, par exemple une couche céramique métallique.

5. Système d'assemblage selon la revendication 1, caractérisé en ce que l'élément de fixation présente une tige cylindrique (49), en ce que un rétrécissement circulaire (50) s'étend coniquement jusqu'à l'extrémité libre, et en ce que un évidement (51) circulaire et en forme de U en la section transversale s'étend à partir de l'extrémité libre vers l'intérieur, ledit évidement étant conçu de telle manière que l'on parvient à une diminution de la tension (figures 10, 11).

6. Système d'assemblage selon la revendication 1, caractérisé en ce que la surface de l'élément de fixation est du moins en partie grenelée, et en ce que le degré de grenaillage est adapté de façon optimale aux propriétés de résistance du matériau à ancrer.

7. Système d'assemblage selon la revendication 1, caractérisé en ce que un assemblage de deux tubes (78, 80) disposés l'un dans l'autre de façon téléscopique est prévu, dans le cas duquel le tube (80) pourvu d'un diamètre plus grand présente une couche intermédiaire adhésive sur sa face interne et où le tube (78) pourvu d'un diamètre plus petit présente une couche intermédiaire adhésive sur sa face externe, si bien que les deux tubes, lorsqu'ils sont montés l'un dans l'autre de façon téléscopique, forment sur les couches intermédiaires adhésives une fixation chimique ou physico-chimique à l'hydrolyse stable.

8. Système d'assemblage selon la revendication 1, caractérisé en ce que la couche intermédiaire adhésive (6) est pourvue d'une couche de plastique appliquée sur la couche intermédiaire adhésive, laquelle forme une fixation chimique avec la couche intermédiaire et le matériau de l'élément de réception.

9. Système d'assemblage selon la revendication 1, caractérisé en ce que plusieurs couches intermédiaires adhésives sont appliquées sur l'élément de fixation.

10. Système d'assemblage selon la revendication 1, caractérisé en ce que l'élément de fixation est une broche et en ce que l'extrémité externe de ladite broche est conçue comme une tête de vis destinée à recevoir un outil de vissage et est pourvu d'une tête et d'une tige, la tête de l'outil ou la tige présentant un point destiné à la rupture à l'endroit duquel la tête de l'outil se sépare de la tige (fig.26).

11. Système d'assemblage selon la revendication 10, caractérisé en ce que la broche (1) s'élargit à une extrémité (12, 13, 17, 20), et en ce que à cet endroit est appliqué un revêtement (14, 15, 18, 19, 21, 22) qui forme une fixation chimique avec l'élément de réception.

12. Système d'assemblage selon la revendication 11, caractérisé en ce que l'élargissement de la broche est un poinçon (13, 17, 20) et en ce que la base dudit poinçon présente la forme d'une flèche et la surface est pourvue d'une couche intermédiaire adhésive.

13. Système d'assemblage selon la revendication 10, caractérisé en ce que la broche (44) présente sur le dessous de la tête de vis (45) un anneau de sécurité (47), en ce que l'anneau (47) est fixé sur la tête de vis (45) et que son dessous se trouve en contact avec l'élément de réception (41), et en ce que la face de l'élément de réception (41) tournée vers l'anneau de sécurité (47) est pourvue d'un contre-anneau de sécurité (48) correspondant.

14. Système d'assemblage selon la revendication 5, caractérisé en ce que la tige cylindrique (49) se meut dans la section transversale en une forme (55) conique et circulaire s'étendant vers l'extérieur, laquelle forme est connectée au rétrécissement (50) conique et circulaire.
